**Europäisches Patentamt**

**European Patent Office**

**Office européen des brevets**

(19)

(11) Veröffentlichungsnummer: **0 557 541 B1**

## EUROPÄISCHE PATENTSCHRIFT

(12)

(45) Veröffentlichungstag der Patentschrift: **04.10.95**

(51) Int. Cl.6: **B21B 37/00**, G05B 13/04

(21) Anmeldenummer: **92103082.1**

(22) Anmeldetag: **24.02.92**

(54) **Regelung mit Vorsteuerung, insbesondere für ein Walzgerüst.**

(43) Veröffentlichungstag der Anmeldung:
**01.09.93 Patentblatt 93/35**

(45) Bekanntmachung des Hinweises auf die Patenterteilung:
**04.10.95 Patentblatt 95/40**

(84) Benannte Vertragsstaaten:
**AT BE CH DE ES FR GB IT LI NL SE**

(56) Entgegenhaltungen:
**DE-A- 3 346 179**

**PROCEEDINGS OF TH 1990 AMERICAN CONTROL CONFERENCE Bd. 2, Mai 1990, SAN DIEGO US Seiten 1695 - 1700 P.M. SAIN, M.K. SAIN, A.N. MICHEL 'ON COORDINATE FEED-FORWARD EXITATION OF NONLINEAR SERVOMECHANISMS' * Seite 1695, Absatz I- Seite 1696,Absatz IV; Abbildung 2.5 ***

(73) Patentinhaber: **SIEMENS AKTIENGESELL-SCHAFT**
**Wittelsbacherplatz 2**
**D-80333 München (DE)**

(72) Erfinder: **Berghs, Andre, Dipl.-Ing.**
**Eggloffsteiner Weg 5**
**W-8524 Neunkirchen (DE)**
Erfinder: **Tröndle, Hans-Peter, Dr.-Ing.**
**Südhang 14**
**W-8550 Forchheim/Kersbach (DE)**
Erfinder: **Hopf, Peter, Dipl.-Ing.**
**Kölner Strasse 26**
**W-8500 Nürnberg (DE)**
Erfinder: **Bytomski, Georg, Dipl.-Ing.**
**Frankenstrasse 1**
**W-8523 Baiersdorf (DE)**
Erfinder: **Felkl, Hans-Joachim, Dipl.-ing.**
**Erlanger Strasse 11**
**W-8521 Spardorf (DE)**

## Beschreibung

Die vorliegende Erfindung betrifft eine Regelung, insbesondere eine hydraulische Anstellungsregelung, z.B. für ein Walzgerüst, die aus mindestens einem Regler und mindestens einem Stellglied besteht, wobei dem Regler als Eingangsgrößen ein Sollwert und ein Istwert zugeführt werden, aufgrund derer der Regler eine Reglerstellgröße für das Stellglied liefert.

Derartige Regelungen sind z.B. aus der DE-A-3 346 179 bekannt. Auch bei derartigen Regelungen mit Vorsteuerung ist die Regeldynamik jedoch begrenzt, da bei einer sprungartigen Sollwertänderung die gesamte Regelabweichung am Reglereingang anliegt. Insbesondere wenn der Regler einen Integralanteil aufweist, führt dies zu einem beträchtlichen Überschwingen des Istwerts über den anzusteuernden Sollwert hinaus.

Aufgabe der vorliegenden Erfindung ist es, eine Regelung mit einer Vorsteuerung derart zu optimieren, daß neue Sollwerte extrem schnell und ohne Überschwingen angefahren werden können.

Die Aufgabe wird dadurch gelöst, daß in einem Modellregelkreis laufend ein aufgrund der Vorsteuerung erwarteter Erwartungswert für den Istwert ermittelt wird, wobei ein aus diesem Erwartungswert ermittelter Führungswert dem Regler als Sollwert zugeführt wird.

Dadurch wird erreicht, daß die Regeldifferenz, d.h. die Differenz von Sollwert und Istwert, sehr gering wird, im Idealfall gleich Null ist, so daß der Regler praktisch nicht aktiv wird. Die Regelverstärkung kann daher derart gewählt werden, daß die Regelung robust gegenüber Parameteränderungen ist. Gleichzeitig wird aufgrund der Vorsteuerung gewährleistet, daß die Dynamik der Regelung hoch bleibt.

Der Modellregelkreis kann ein lineares oder aber ein nichtlineares Regelstreckenmodell aufweisen, je nach der zu simulierenden Regelstrecke. Wenn der Modellregelkreis ein nichtlineares Regelstreckenmodell aufweist, können nichtlineare Regelstrecken besser modelliert werden. Dadurch verbessert sich die Regelgüte.

Wenn der Erwartungswert laufend mit einem von außen vorgebbaren Leitwert verglichen und der Reglerstellgröße solange der Vorsteuerwert aufgeschaltet wird, wie der Erwartungswert ungleich dem Leitwert ist, wobei der Vorsteuerwert als Funktion der Differenz von Leitwert und Erwartungswert bestimmt wird, wird erreicht, daß die Vorsteuerung - bei korrektem Regelstreckenmodell - ohne Aktivierung des Reglers den Leitwert nicht nur teilweise, sondern in vollem Umfang anfährt.

Wenn die Funktion derart gewählt ist, daß der Erwartungswert dem Leitwert schnellstmöglich und insbesondere auch überschwingungsfrei folgt, ist gewährleistet, daß der Leitwert zeitoptimal angefahren werden kann.

Wenn das Stellglied zeitverzögert auf die Stellgröße reagiert, ist es von Vorteil, wenn zur Vermeidung einer Differenz zwischen Führungswert und Istwert bei der Ermittlung des Führungswertes das zeitverzögerte Reagieren des Stellgliedes in dem Modellregelkreis berücksichtigt wird. Dadurch wird nämlich vermieden, daß während des Vorsteuerns der Regler in unerwünschter Weise in den Steuerungsvorgang eingreift. Besonders lästig ist das Eingreifen des Reglers, wenn der Regler einen Integralanteil aufweist. Der Grund dafür ist, daß in einem Integralanteil des Reglers eine Regeldifferenz aufintegriert wird, die am Ende des Vorsteuervorgangs wieder abgebaut werden muß, was zu einem Überschwingungen des Istwerts führen würde.

Vorteilhafterweise werden zur Vermeidung einer Differenz zwischen Führungswert und Istwert auch die Einflüsse von Meßwerterfassung und/oder Meßwertaufbereitung und/oder einer Rechentotzeit zumindest teilweise bei der Ermittlung des Führungswertes berücksichtigt.

Wenn die Berücksichtigung der Zeitverzögerung zumindest teilweise erst nach dem Ermitteln des Erwartungswerts erfolgt, wird die Vorsteuerung gerade rechtzeitig vor Erreichen des Leitwertes abgeschaltet, so daß der Istwert trotz des zeitverzögerten Reagierens des Stellgliedes nicht über den Leitwert hinausschwingt.

Besonders vorteilhaft ist die Regelung, wenn sie aus mehreren, sich aufgrund ihrer technologischen Wirkung gegenseitig beeinflussenden Einzelregelungen besteht und zur Entkopplung der Einzelregelungen voneinander Transformationen der Leitwerte, der Führungswerte, der Istwerte und der Reglerstellgrößen der Einzelregelungen vorgenommen werden. Zur Berücksichtigung von nichtlinearen Lastabhängigkeiten erfolgt die Ermittlung der Vorsteuerwerte, der Erwartungswerte und der Führungswerte in untransformierten Größen. Daher werden die Vorsteuerwert direkt auf die untransformierten Reglerstellgrößen aufgeschaltet.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Dabei zeigen:

FIG 1 ein Zwanzigrollen-Walzgerüst,

FIG 2 eine Regelung mit Vorsteuerung und

FIG 3 den internen Aufbau der Vorsteuerung.

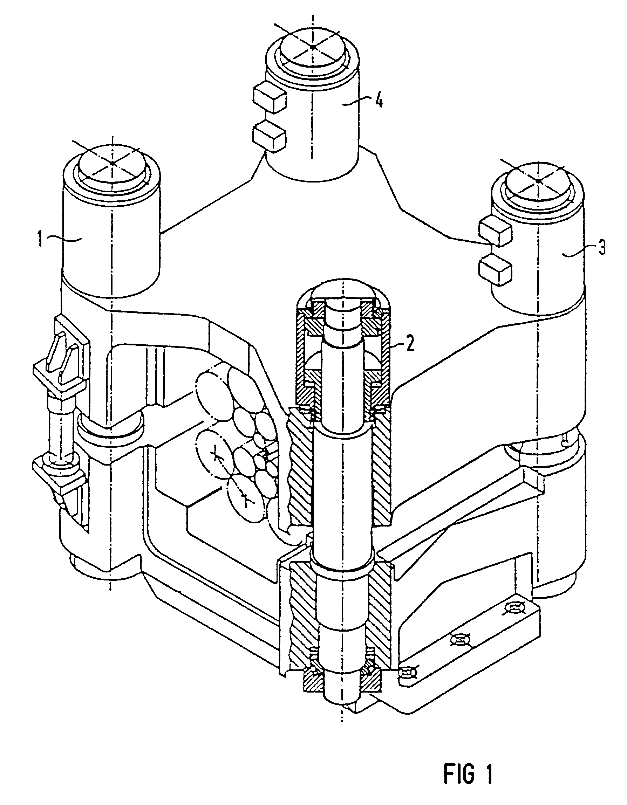

Gemäß FIG 1 ist ein Zwanzigrollen-Walzgerüst derart aufgebaut, daß der Schwerpunkt $x_M$ der Anstellung, die Schräglage $x_S$ der Anstellung und die Gleichläufe $x_{G12}$ und $x_{G34}$ mittels der vier Hydraulikzylinder 1 bis 4 eingestellt werden. Der Schwerpunkt $x_M$ der Anstellung ist dabei als Mittelwert der

Anstellmeßwerte $x_1$ bis $x_4$ an den Säulen 1 bis 4 gegeben. Die Schräglage $x_S$ der Anstellung ist durch den Mittelwert der Anstellmeßwerte $x_1$ und $x_2$ an den Säulen 1 und 2, abzüglich des Mittelwertes der Anstellmeßwerte $x_3$ und $x_4$ an den Säulen 3 und 4, gegeben. Der linksseitige Gleichlauf $x_{G12}$ ist durch die Differenz der Anstellmeßwerte $x_1$ und $x_2$ an den Säulen 1 und 2 gegeben. Analog errechnet sich der rechte Gleichlauf $x_{G34}$.

Die Gesamtregelung des Walzgerüsts besteht daher eindeutig aus mehreren Einzelregelungen, die sich gegenseitig beeinflussen. Um die Einzelregelungen soweit wie möglich voneinander zu entkoppeln, werden zur Regelung des Walzgerüsts jedoch nicht die vier Anstellwege $x_1$ bis $x_4$ direkt geregelt, sondern Schwerpunkt $x_M$ und Schräglage $x_S$ der Anstellung sowie die Gleichläufe $x_{G12}$ und $x_{G34}$ des Walzgerüsts geregelt.

Aus den Reglerstellgrößen $\Delta v_M^*$, $\Delta v_S^*$, $\Delta v_{G12}^*$ und $\Delta v_{G34}^*$, die diese Regelungen liefern, werden dann Reglerstellgrößen $\Delta v_1^*$ bis $\Delta v_4^*$ für die einzelnen Säulen 1 bis 4 durch eine Transformation der Reglerstellgrößen ermittelt.

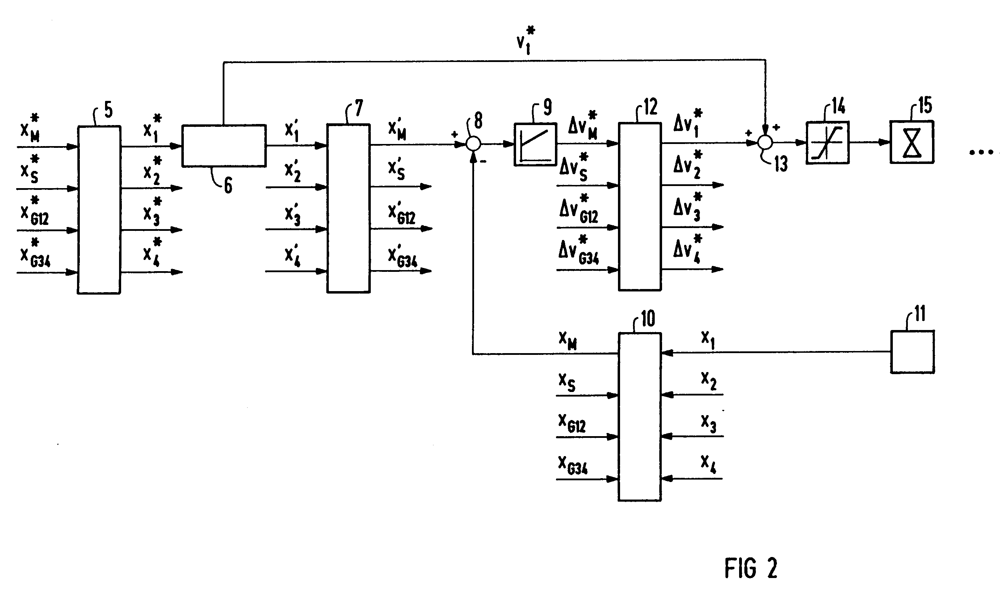

FIG 2 zeigt den Aufbau der Regelung für ein Zwanzigrollen-Walzgerüst. Von außen werden der Regelung Leitwerte $x_M^*$, $x_S^*$, $x_{G12}^*$ und $x_{G34}^*$ für Schwerpunkt $x_M$ und Schräglage $x_S$ der Anstellung sowie für die Gleichläufe $x_{G12}$ und $x_{G34}$ vorgegeben. Diese Werte $x_M^*$, $x_S^*$, $x_{G12}^*$ und $x_{G34}^*$ werden in der Umrecheneinheit 5 in Leitwerte $x_1^*$ bis $x_4^*$ für die Anstellwege $x_1$ bis $x_4$ der Hydraulikzylinder 1 bis 4 umgerechnet.

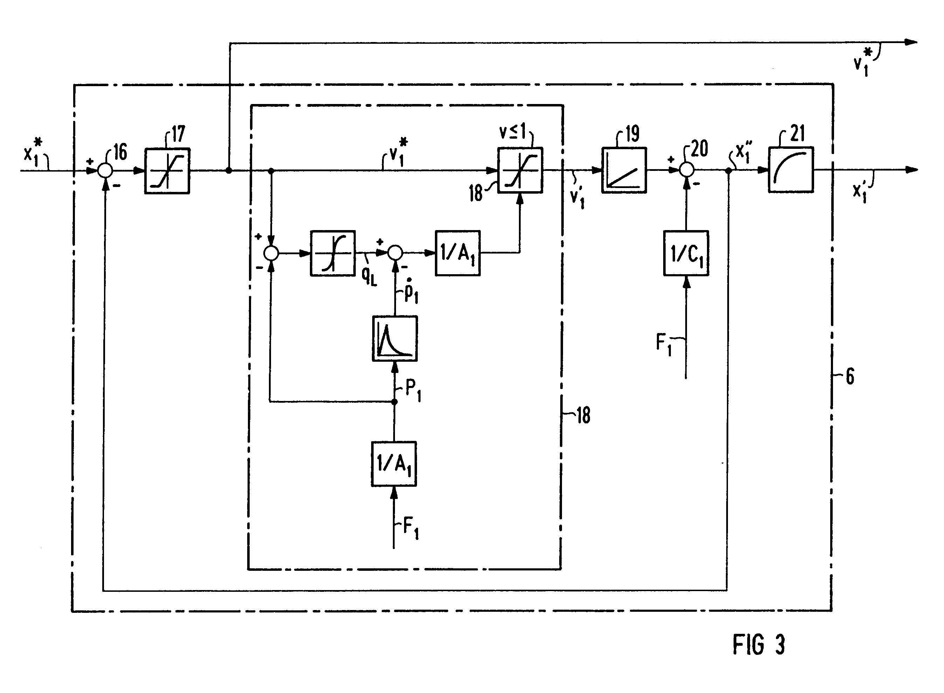

Im Modellregelkreis 6 wird aus dem Leitwert $x_1^*$ in Verbindung mit einem bei FIG 3 noch näher erläuterten Erwartungswert $x_1''$ unter Berücksichtigung der physikalischen Grenzen der Regelung und der Regelstrecke ein Vorsteuerwert $v_1^*$ für den Hydraulikzylinder 1 und ein Führungswert $x_1'$ für den Regler 9 ermittelt. In analoger Weise werden in weiteren (der Übersichtlichkeit halber nicht dargestellten) Modellregelkreisen Vorsteuerwerte $v_2^*$ bis $v_4^*$ für die Hydraulikzylinder 2 bis 4 und Führungswerte $x_2'$ bis $x_4'$ ermittelt.

Die mittels der Modellregelkreise ermittelten Führungswerte $x_1'$ bis $x_4'$ werden in der Umrecheneinheit 7 in Führungswerte $x_M'$, $x_S'$, $x_{G12}'$ und $x_{G34}'$ für Schwerpunkt $x_M$ und Schräglage $x_S$ der Anstellung sowie der Gleichläufe $x_{G12}$ und $x_{G34}$ umgerechnet. Die derart transformierten Führungswerte $x_M'$, $x_S'$, $x_{G12}'$ und $x_{G34}'$ werden als Sollwerte Reglern zugeführt.

In FIG 2 ist, wiederum der besseren Übersichtlichkeit halber, nur der Regler 9 dargestellt, dem über die Summationsstelle 8 der Führungswert $x_M'$ zugeführt wird.

Der Regler 9 erhält als Istwert den Istwert $x_M$ des Schwerpunkts der Anstellung, der in der Umrecheneinheit 10 aus den Istwerten $x_1$ bis $x_4$ der

Anstellung ermittelt wurde. Die Istwerte $x_1$ bis $x_4$ der Anstellung werden dabei durch Meßwertgeber geliefert, von denen wieder nur der Meßwertgeber 11 für den Anstellweg $x_1$ dargestellt ist.

Aufgrund der Differenz von Führungswert $x_M'$ und Istwert $x_M$ liefert der Regler 9, der im vorliegenden Fall ein P- oder ein PI-Regler ist, eine Reglerstellgröße $\Delta v_M^*$ für die Solländerung der Schwerpunktlage $x_M$ der Anstellung. Die Reglerstellgrößen $\Delta v_M^*$, $\Delta v_S^*$, $\Delta v_{G12}^*$ und $\Delta v_{G34}^*$ werden in der Umrecheneinheit 12 in Reglerstellgrößen $\Delta v_1^*$ bis $\Delta v_4^*$ für die Hydraulikzylinder 1 bis 4 umgerechnet.

Auf die Reglerstellgröße $\Delta v_1^*$ wird in der Summationsstelle 13 der Vorsteuerwert $v_1^*$ aufgeschaltet. Die Summe dieser beiden Werte $v_1^* + \Delta v_1^*$ wird nach Durchlaufen des Begrenzers 14 als eigentliche Stellgröße dem Stellventil 15 zugeführt, das zusammen mit dem Hydraulikzylinder 1 als Stellglied wirkt. Die Vorsteuerwerte $v_2^*$ bis $v_4^*$ werden in analoger Weise auf die Reglerstellgrößen $\Delta v_2^*$ bis $\Delta v_4^*$ aufgeschaltet. Der diesbezügliche Teil der Schaltung wurde jedoch der besseren Übersichtlichkeit halber ebenfalls nicht dargestellt.

FIG 3 zeigt den inneren Aufbau des Modellregelkreises 6 sowie die Berechnung des Vorsteuerwerts $v_1^*$, des Erwartungswerts $x_1''$ sowie des Führungswertes $x_1'$.

Der Modellregelkreis 6 simuliert die aus Stellglied 1, 15 und Mechanik bestehende Regelstrecke einschließlich der Rückkopplung des Istwerts $x_1$, der im Modellregelkreis 6 in Form des Erwartungswertes $x_1''$ zurückgeführt wird. Konkret bildet der Modellregelkreis 6 in der Summationsstelle 16 die Differenz von Leitwert $x_1^*$ und Erwartungswert $x_1''$. Diese Differenz wird im Funktionsglied 17 verstärkt und entsprechend den physikalischen Grenzen des Systems begrenzt. Das Funktionsglied 17 berücksichtigt dabei unter anderem die maximal mögliche Verstellgeschwindigkeit des Hydraulikzylinders 1 sowie den Rechentakt im Modellregelkreis 6. Dadurch wird erreicht, daß der Erwartungswert $x_1''$ dem Leitwert $x_1^*$ zeitoptimiert, d.h. schnellstmöglich und überschwingungsfrei, folgt.

Das Ausgangssignal des Funktionsgliedes 17 wird unter anderem als Vorsteuerwert $v_1^*$ für das Stellventil 15 des Hydraulikzylinders 1 verwendet. Weiterhin wird das Ausgangssignal $v_1^*$ des Funktionsgliedes 17 dem Funktionsglied 18 zugeführt, dessen Funktionsweise später noch näher erläutert werden wird.

Das Ausgangssignal des Funktionsgliedes 18 ist die erwartete Verstellgeschwindigkeit $v_1'$ des Kolbens des Hydraulikzylinders 1. Die erwartete Verstellgeschwindigkeit $v_1'$ wird im Integrierer 19 aufintegriert, um den Verstellweg des Kolbens zu erhalten. Vom Verstellweg des Kolbens wird in der Summationsstelle 20 noch die elastische Durchfederung zwischen Hydraulikkolben und der Meßstelle, d.h. der Stelle, an welcher der Anstellweg $x_1$ gemessen wird, abgezogen, wobei die Durchfederung durch die im Hydraulikzylinder 1 herrschende Kraft $F_1$ und die resultierende Federkonstante $C_1$ der Mechanik zwischen Kolben und Meßstelle gegeben ist.

Der nunmehr gegebene Erwartungswert $x_1''$ ist der Wert, der auf den Eingang des Modellregelkreises 6 zurückgeführt wird.

Bevor der Erwartungswert $x_1''$ vom Modellregelkreis 6 ausgegeben wird, wird im Filter 21 das sogenannte parasitäre Übertragungsverhalten berücksichtigt. Zum parasitären Übertragungsverhalten zählen z.B. das verzögerte Reagieren des Stellglieds 1, 15 auf einen Stellbefehl, Verzögerungen bei der Meßwerterfassung, Totzeiten bei der Meßwertaufbereitung, die Rechentotzeit usw. Durch die Berücksichtigung des parasitären Übertragungsverhaltens wird erreicht, daß der dem Regler 9 zugeführte Führungswert $x_M'$ im zeitlichen Mittel gleich dem Istwert $x_M$ ist. Wenn im Einzelfall das parasitäre Übertragungsverhalten vernachlässigbar ist, kann selbstverständlich der Erwartungswert $x_1''$ selbst als Führungswert verwendet werden.

Die Berücksichtigung des parasitären Übertragungsverhaltens erfolgt im Ausführungsbeispiel erst nach dem Rückführen des Erwartungswertes $x_1''$, damit die Vorsteuerung rechtzeitig abgeschaltet wird, bevor der Istwert $x_1$ den Leitwert $x_1^*$ erreicht. Ansonsten würde nämlich der Istwert $x_1$ über den Leitwert $x_1^*$ hinausschwingen.

Das Funktionsglied 18 dient der Berücksichtigung der Lastabhängigkeit der Verstellgeschwindigkeit $v_1$. Das Funktionsglied 18 ist derart ausgelegt, daß es unterhalb einer lastabhängigen Aussteuerungsgrenze als Verstärker mit dem Verstärkungsfaktor 1 und darüber als Begrenzer wirkt. Die Aussteuerungsgrenze wird dabei in Abhängigkeit vom Vorsteuerwert $v_1^*$, vom Kolbenquerschnitt $A_1$ des Hydraulikzylinders 1, dem im Hydrauliköl herrschenden Druck $p_1$, der zeitlichen Druckänderung $\dot{p}_1$ und der Steifigkeit der Mechanik berechnet. Die Aussteuerungsgrenze wird dabei je nach Größe der Last und Richtung der Verstellung verändert.

Dadurch, daß die Berücksichtigung der Lastabhängigkeit der Verstellgeschwindigkeit $v_1$ des Hydraulikkolbens nur über die Aussteuerungsgrenze des Funktionsgliedes 18 erfolgt, besteht nicht die Gefahr, daß der Modellregelkreis 6 instabil wird.

Im Idealfall ist das Regelstreckenmodell, das zwischen dem Funktionsglied 17 und der Umrecheneinheit 7 (vgl. FIG 2) angeordnet ist, so ausgelegt, daß es das Verhalten der Regelstrecke exakt simuliert. Dieser Idealfall ist jedoch normalerweise nicht zu erreichen. Es genügt jedoch, wenn der Führungswert $x_M'$ (bzw. $x_S'$ bzw. $x_{G12}'$ bzw. $x_{G34}'$) im zeitlichen Mittel gleich dem Istwert $x_M$ (bzw. $x_S$

bzw. $x_{G12}$ bzw. $x_{G34}$) ist. Bereits dann müssen nämlich die Regler nur die Restunterschiede ausregeln. Die Regelung kann daher robust ausgelegt werden. Die Regeldynamik wird durch die Vorsteuerung garantiert. Das Anfahren neuer Leitwerte $x_M^*$, $x_S^*$, $x_{G12}^*$ und $x_{G34}^*$ kann mit der erfindungsgemäßen Regelung insbesondere bei kleinen Leitwertänderungen erheblich beschleunigt werden.

Um das Regelstreckenmodell möglichst gut an die zu simulierende Regelstrecke anzupassen, sollte das Regelstreckenmodell als selbstadaptierendes Regelstreckenmodell ausgebildet sein. Die Adaptierung kann in an sich bekannter Art und Weise erfolgen.

## Patentansprüche

1. Regelung, insbesondere hydraulische Anstellungsregelung, z.B. für ein Walzgerüst, die aus mindestens einem Regler (9) und mindestens einem Stellglied (15) besteht, wobei dem Regler (9) als Eingangsgrößen ein Sollwert und ein Istwert zugeführt werden, aufgrund derer der Regler (9) eine Reglerstellgröße für das Stellglied (15) liefert, **dadurch gekennzeichnet,** daß auf die Reglerstellgröße ein Vorsteuerwert aufgeschaltet wird, wobei in einem Modellregelkreis (6) laufend ein aufgrund der Vorsteuerung erwarteter Erwartungswert für den Istwert ermittelt wird, wobei ein aus diesem Erwartungswert ermittelter Führungswert dem Regler (9) als Sollwert zugeführt wird.

2. Regelung nach Anspruch 1, **dadurch gekennzeichnet,** daß der Modellregelkreis (6) ein nichtlineares Regelstreckenmodell aufweist.

3. Regelung nach Anspruch 1, **dadurch gekennzeichnet,** daß der Modellregelkreis (6) ein lineares Regelstreckenmodell aufweist.

4. Regelung nach Anspruch 1, 2 oder 3, **dadurch gekennzeichnet,** daß der Erwartungswert ($x_1''$) laufend mit einem von außen vorgebbaren Leitwert ($x_1^*$) verglichen und der Reglerstellgröße ($\Delta v_1^*$) solange der Vorsteuerwert ($v_1^*$) aufgeschaltet wird, wie der Erwartungswert ($x_1''$) ungleich dem Leitwert ($x_1^*$) ist, wobei der Vorsteuerwert ($v_1^*$) als Funktion der Differenz von Leitwert ($x_1^*$) und Erwartungswert ($x_1''$) bestimmt wird.

5. Regelung nach Anspruch 4, **dadurch gekennzeichnet,** daß die Funktion derart gewählt ist, daß der Erwartungswert ($x_1''$) dem Leitwert ($x_1^*$) schnellstmöglich folgt.

**6.** Regelung nach Anspruch 4 oder 5, **dadurch gekennzeichnet,** daß die Funktion derart gewählt ist, daß der Erwartungswert ($x_1$'') dem Leitwert ($x_1$*) überschwingungsfrei folgt.

**7.** Regelung nach einem der obigen Ansprüche, bei der das Stellglied (1,15) zeitverzögert auf die Stellgröße ($v_1$* + $\Delta v_1$*) reagiert und bei der zur Vermeidung einer Differenz zwischen Führungswert ($x_M$') und Istwert ($x_M$) bei der Ermittlung des Führungswertes ($x_1$') das zeitverzögerte Reagieren des Stellgliedes (1,15) in dem Modellregelkreis (6) berücksichtigt wird.

**8.** Regelung nach einem der obigen Ansprüche, **dadurch gekennzeichnet,** daß zur Vermeidung einer Differenz zwischen Führungswert ($x_M$') und Istwert ($x_M$) die Einflüsse von Meßwerterfassung und/oder Meßwertaufbereitung und/oder einer Rechentotzeit zumindest teilweise bei der Ermittlung des Führungswertes ($x_1$') berücksichtigt werden.

**9.** Regelung nach Anspruch 7 oder 8, **dadurch gekennzeichnet,** daß die Berücksichtigung der Zeitverzögerung zumindest teilweise erst nach dem Ermitteln des Erwartungswerts ($x_1$'') erfolgt.

**10.** Regelung nach einem der obigen Ansprüche, **dadurch gekennzeichnet,** daß die am Stellglied (1,15) anstehende Last in dem Modellregelkreis (6) bei der Ermittlung des Erwartungswertes ($x_1$'') berücksichtigt wird.

**11.** Regelung nach Anspruch 10, **dadurch gekennzeichnet,** daß zur Berücksichtigung der Lastabhängigkeit in dem Modellregelkreis (6) aus dem Vorsteuerwert ($v_1$*) eine erwartete, lastabhängige Verstellgeschwindigkeit ($v_1$') des Stellgliedes (1,15) ermittelt wird.

**12.** Regelung nach Anspruch 11, **dadurch gekennzeichnet,** daß die erwartete Verstellgeschwindigkeit ($v_1$') unterhalb einer Aussteuerungsgrenze gleich dem Vorsteuerwert ($v_1$*) ist und oberhalb der Aussteuerungsgrenze auf den Wert der Aussteuerungsgrenze beschränkt ist, wobei die Aussteuerungsgrenze lastabhängig, insbesondere auch last- und richtungsabhängig, vorgegeben wird.

**13.** Regelung nach Anspruch 10, 11 oder 12, **dadurch gekennzeichnet,** daß zur Vermeidung eines Regelfehlers bei der Ermittlung des Führungswertes ($x_1$') lastbedingte Istwertverschiebungen berücksichtigt werden.

**14.** Regelung nach Anspruch 13, **dadurch gekennzeichnet,** daß die lastbedingten Istwertverschiebungen zumindest teilweise bereits bei der Ermittlung des Erwartungswertes ($x_1$'') berücksichtigt werden.

**15.** Regelung nach einem der obigen Ansprüche, **dadurch gekennzeichnet,** daß der Modellregelkreis (6) ein selbstadaptierendes Regelstreckenmodell aufweist.

**16.** Regelung nach einem der obigen Ansprüche, **dadurch gekennzeichnet,** daß sie aus mehreren, sich aufgrund ihrer technologischen Wirkung gegenseitig beeinflussenden Einzelregelungen (9) besteht und daß zur Entkopplung der Einzelregelungen (9) voneinander Transformationen der Leitwerte ($x_M$*,$x_S$*,$x_{G12}$*,$x_{G34}$*), der Führungswerte ($x_1$' bis $x_4$'), der Istwerte ($x_1$ bis $x_4$) und der Reglerstellgrößen ($\Delta v_M$*, $\Delta v_S$*, $\Delta v_{G12}$*, $\Delta v_{G34}$*) der Einzelregelungen (9) vorgenommen werden.

**17.** Regelung nach Anspruch 16, **dadurch gekennzeichnet,** daß zur Berücksichtigung von nichtlinearen Lastabhängigkeiten die Ermittlung der Vorsteuerwerte ($v_1$* bis $v_4$*), der Erwartungswerte ($x_1$'' bis $x_4$'') und der Führungswerte ($x_1$' bis $x_4$') in untransformierten Größen erfolgt.

**18.** Regelung nach Anspruch 16 oder 17, **dadurch gekennzeichnet,** daß die Vorsteuerwerte ($v_1$* bis $v_4$*) direkt auf die untransformierten Reglerstellgrößen ($\Delta v_1$* bis $\Delta v_4$*) aufgeschaltet werden.

**19.** Regelung nach einem der obigen Ansprüche, **dadurch gekennzeichnet,** daß sie bei einem Walzgerüst angewendet wird.

**20.** Regelung nach Anspruch 19, **dadurch gekennzeichnet,** daß das Walzgerüst ein Zwanzigrollen-Walzgerüst ist.

**Claims**

**1.** Control, in particular a hydraulic setting control, for example for a rolling stand, which consists of at least one controller (9) and at least one actuator (15), whereby a desired value and an actual value are supplied to the controller (9) as input variables, on the basis of which values the controller (9) supplies a controller manipulated variable for the actuator (15), characterized in that a precontrol value is applied to the controller manipulated variable, whereby in a model control circuit (6) an expected value expected on the basis of the precontrol is continually determined for the actual value, whereby a reference value determined from this expected value is supplied to the controller (9) as desired value.

2. Control according to claim 1, characterized in that the model control circuit (6) has a non-linear controlled system model.

3. Control according to claim 1, characterized in that the model control circuit (6) has a linear controlled system model.

4. Control according to claim 1, 2 or 3, characterized in that the expected value ($x_1''$) is continually compared with a conductance ($x_1^*$) capable of being specified externally, and the precontrol value ($v_1^*$) is applied to the controller manipulated variable ($\Delta v_1^*$) for as long as the expected value ($x_1''$) differs from the conductance ($x_1^*$), whereby the precontrol value ($v_1^*$) is determined as a function of the difference of the conductance ($x_1^*$) and the expected value ($x_1''$).

5. Control according to claim 4, characterized in that the function is selected in such a way that the expected value ($x_1''$) follows the conductance ($x_1^*$) as rapidly as possible.

6. Control according to claim 4 or 5, characterized in that the function is selected in such a way that the expected value ($x_1''$) follows the conductance ($x_1^*$) without overshoot.

7. Control according to one of the above claims, where the actuator (1, 15) reacts in a time-delayed manner to the manipulated variable ($v_1^* + \Delta v_1^*$) and where to avoid a difference between the reference value ($x_M'$) and the actual value ($x_M$) in the determination of the reference value ($x_1'$) the time-delayed reaction of the actuator (1, 15) in the model control circuit (6) is considered.

8. Control according to one of the above claims, characterized in that to avoid a difference between the reference value ($x_M'$) and the actual value ($x_M$) the influences of measured-value detection and/or measured-value preparation and/or a computer delay are considered at least in part in the determination of the reference value ($x_1'$).

9. Control according to claim 7 or 8, characterized in that the consideration of the time delay takes place at least in part only after the determination of the expected value ($x_1''$).

10. Control according to one of the above claims, characterized in that the load applied to the actuator (1, 15) in the model control circuit (6) is considered in the determination of the expected value ($x_1''$).

11. Control according to claim 10, characterized in that to consider the load dependence in the model control circuit (6) an expected, load-dependent adjusting speed ($v_1'$) of the actuator (1, 15) is determined from the precontrol value ($v_1^*$).

12. Control according to claim 11, characterized in that the expected adjusting speed ($v_1'$) below a modulation limit is equal to the precontrol value ($v_1^*$) and above the modulation limit is restricted to the value of the modulation limit, whereby the modulation limit is specified in load-dependent manner, in particular also in a load-dependent and direction-dependent manner.

13. Control according to claim 10, 11 or 12, characterized in that to avoid a control error in the determination of the reference value ($x_1'$) load-conditional actual-value displacements are considered.

14. Control according to claim 13, characterized in that the load-conditional actual-value displacements are considered at least in part already during the determination of the expected value ($x_1''$).

15. Control according to one of the above claims, characterized in that the model control circuit (6) has a self-adapting controlled system model.

16. Control according to one of the above claims, characterized in that it consists of several individual controls (9) influencing each other due to their technological action and in that to decouple the individual controls (9) from each other transformations of the conductances ($x_M^*$, $x_S^*$, $x_{G12}^*$, $x_{G34}^*$), the reference values ($x_1'$ to $x_4'$), the actual values ($x_1$ to $x_4$) and the controller manipulated variables ($\Delta v_M^*$, $\Delta v_S^*$, $\Delta v_{G12}^*$, $\Delta v_{G34}^*$) of the individual controls (9) are undertaken.

17. Control according to claim 16, characterized in that to consider non-linear load dependencies the determination of the precontrol values ($v_1^*$ to $v_4^*$), the expected values ($x_1''$ to $x_4''$) and

the reference values ($x_1$' to $x_4$') into untransformed variables takes place.

18. Control according to claim 16 or 17, characterized in that the precontrol values ($v_1$* to $v_4$*) are applied directly to the untransformed controller manipulated variables ($\Delta v_1$* to $\Delta v_4$*).

19. Control according to one of the above claims, characterized in that it is used with a rolling stand.

20. Control according to claim 19, characterized in that the rolling stand is a rolling stand with twenty rollers.

**Revendications**

1. Régulation, en particulier régulation de serrage hydraulique, par exemple pour une cage de laminoir, comportant au moins un régulateur (9) et au moins un organe final (15), une valeur de consigne et une valeur effective étant amenées comme grandeurs d'entrée au régulateur (9), sur la base desquelles le régulateur (9) fournit une variable réglante pour l'organe final (15), caractérisée en ce qu'une valeur pilote est imposée à la variable réglante, une valeur escomptée pour la valeur effective, résultant de la commande pilote, étant déterminée en permanence, dans un système asservi de modèle (6), une valeur de commande déterminée à partir de ladite valeur escomptée étant amenée comme valeur de consigne au régulateur (9).

2. Régulation selon la revendication 1, caractérisée en ce que le système asservi de modèle (6) comporte un modèle de système commandé non linéaire.

3. Régulation selon la revendication 1, caractérisée en ce que le système asservi de modèle (6) comporte un modèle de système commandé linéaire.

4. Régulation selon la revendication 1, 2 ou 3, caractérisée en ce que l'on compare la valeur escomptée ($x_1$'') en permanence avec une valeur de référence ($x_1$*) prédéfinissable de l'extérieur, et l'on impose à la variable réglante ($\Delta v_1$*) la valeur pilote ($v_1$*) aussi longtemps que la valeur escomptée ($x_1$'') est différente de la valeur de référence ($x_1$*), la valeur pilote ($v_1$*) étant déterminée comme fonction de la différence entre la valeur de référence ($x_1$*) et la valeur escomptée ($x_1$'').

5. Régulation selon la revendication 4, caractérisée en ce que la fonction est choisie de telle sorte que la valeur escomptée ($x_1$'') suit le plus rapidement possible la valeur de référence ($x_1$*).

6. Régulation selon la revendication 4 ou 5, caractérisée en ce que la fonction est choisie de telle sorte que la valeur escomptée ($x_1$'') suit la valeur de référence ($x_1$*) sans dépassement.

7. Régulation selon l'une des revendications précédentes, selon laquelle l'organe final (1, 15) réagit à retardement sur la variable réglante ($v_1$* + $\Delta v_1$*) et selon laquelle il est tenu compte de la réaction retardée de l'organe final (1, 15) dans le système asservi de modèle (6) lors de la détermination de la valeur de commande ($x_1$'), afin d'éviter une différence entre la valeur de commande ($x_M$') et la valeur de consigne ($x_M$).

8. Régulation selon l'une des revendications précédentes, selon laquelle il est tenu compte au moins partiellement des influences de la saisie des valeurs mesurées et/ou de la préparation des valeur mesurées et/ou d'un temps mort de calcul lors de la détermination de la valeur de commande ($x_1$'), afin d'éviter une différence entre la valeur de commande ($x_M$') et la valeur de consigne ($x_M$).

9. Régulation selon la revendication 7 ou 8, caractérisée en ce que l'on tient compte du temps de retard au moins partiellement seulement après la détermination de la valeur escomptée ($x_1$'').

10. Régulation selon l'une des revendications précédentes, caractérisée en ce qu'il est tenu compte de la charge apparente à l'organe final (1, 15) dans le système asservi de modèle (6) lors de la détermination de la valeur escomptée ($x_1$'').

11. Régulation selon la revendication 10, caractérisée en ce que l'on détermine pour l'organe final (1, 15), à partir de la valeur pilote ($v_1$*), une vitesse variable ($v_1$') escomptée, dépendante de la charge, afin de tenir compte de la dépendance de la charge dans le système asservi de modèle (6).

12. Régulation selon la revendication 11, caractérisée en ce que la vitesse variable ($v_1$') escomptée est au-dessous d'une limite de réglage égale à la valeur pilote ($v_1$*) et au-dessus de la limite de réglage restreinte à la valeur de la limite de réglage, la limite de réglage étant donnée en fonction de la charge, en particulier en fonction de la charge et de la direction.

**13.** Régulation selon la revendication 10, 11 ou 12, caractérisée en ce que lors de la détermination de la valeur de commande ($x_1'$) il est tenu compte des décalages des valeurs effectives dus à la charge, afin d'éviter une erreur de réglage.

**14.** Régulation selon la revendication 13, caractérisée en ce que l'on tient compte des décalages des valeurs effectives dus à la charge au moins partiellement déjà au moment de la détermination de la valeur escomptée ($x_1''$).

**15.** Régulation selon l'une des revendications précédentes, caractérisée en ce que le système asservi de modèle (6) comporte un modèle de système commandé autoadaptable.

**16.** Régulation selon l'une des revendications précédentes, caractérisée en ce qu'elle est composée de plusieurs régulations individuelles (9) s'influençant mutuellement en raison de leur effet technologique, et en ce que l'on transforme les valeurs de référence ($x_M^*$, $x_S^*$, $x_{G12}^*$, $x_{G34}^*$), les valeurs de commande ($x_1'$ à $x_4'$), les valeurs effectives ($x_1$ à $x_4$) et les variables réglantes ($\Delta v_M^*$, $\Delta v_S^*$, $\Delta v_{G12}$, $^*\Delta_{G34}^*$) des régulations individuelles (9), pour annuler cette influence mutuelle des régulations individuelles (9).

**17.** Régulation selon la revendication 16, caractérisée en ce que l'on détermine les valeurs pilotes ($v_1^*$ à $v_4^*$), les valeurs escomptées ($x_1''$ à $x_4''$) et les valeurs de commande ($x_1'$ à $x_4'$) sous forme de grandeurs non transformées, afin de tenir compte des dépendances de charge non linéaires.

**18.** Régulation selon la revendication 16 ou 17, caractérisée en ce que les valeurs pilotes ($v_1^*$ à $v_4^*$) sont imposées directement aux variables réglantes ($\Delta v_1^*$ à $\Delta v_4^*$) non transformées.

**19.** Régulation selon l'une des revendications précédentes, caractérisée en ce qu'elle est utilisée pour une cage de laminoir.

**20.** Régulation selon la revendication 19, caractérisée en ce que la cage de laminoir est une cage de laminoir à vingt rouleaux.

FIG 1

FIG 2

FIG 3